# EUROPÄISCHE PATENTSCHRIFT

(11) **EP 4 307 148 B1**
(45) Veröffentlichungstag und Bekanntmachung des Hinweises auf die Patenterteilung: **10.06.2026**
(21) Anmeldenummer: 22184350.1
(22) Anmeldetag: 12.07.2022
(51) Int. Cl.: G06F 21/57

(54) **ATTESTIERUNG EINER CLOUD-BASIERTEN AUSFÜHRUNGSUMGEBUNG FÜR EINE PROJEKTIERUNG**
ACCREDITATION OF A CLOUD BASED EXECUTION ENVIRONMENT FOR PROJECT PLANNING
ATTESTATION D'UN ENVIRONNEMENT D'EXÉCUTION BASÉ SUR LE NUAGE POUR UNE ÉLABORATION DES PROJETS

(43) Veröffentlichungstag der Anmeldung: 17.01.2024
(73) Patentinhaber: Siemens Aktiengesellschaft, 80333 München (DE)
(72) Erfinder: Becker, Stefan, 91325 Adelsdorf (DE); Falk, Rainer, 85586 Poing (DE); Feist, Christian Peter, 80689 München (DE); Hofmann, Klaus-Peter, 91086 Aurachtal-Münchaurach (DE)
(74) Vertreter: Siemens Patent Attorneys

(56) Entgegenhaltungen:
- EP-A1- 3 907 637
- US-A1- 2018 373 881
- US-A1- 2022 198 064

## Beschreibung

### HINTERGRUND DER ERFINDUNG

### Gebiet der Erfindung

Die vorliegende Erfindung betrifft eine Attestierungskomponente, ausgebildet eine Cloud-basierte Ausführungsumgebung zu attestieren, wobei die Cloud-basierte Ausführungsumgebung mindestens eine Applikationsinstanz und eine Projektierung aufweist. Die Erfindung betrifft außerdem ein zugehöriges Verfahren zum Attestieren einer Cloud-basierten Ausführungsumgebung.

### Beschreibung des Stands der Technik

In der Automatisierungsindustrie werden Automatisierungsfunktionen wie insbesondere eine Maschinensteuerung oder Diagnosefunktionen in zunehmendem Maße unter Nutzung von Cloud-Technologien und Cloud-Infrastrukturen realisiert (z.B. SoftPLC).

Weiterhin werden auch die entsprechenden Projektierungssysteme (Engineering System (ES)) zunehmend über Cloud-Infrastrukturen angeboten. Beispiele hierfür sind das Bereitstellen einer TIA-Portal Instanz in einer Cloud-Umgebung.

Die Projektierung einer Automatisierungskomponente, wie insbesondere einer Steuerung (PLC), einem HMI Panel, einer IO-Baugruppe, erfolgt so über eine in der Cloud betriebenen ES-Applikationsinstanz, die dem Anwender (Projektierer) zur Nutzung bereitgestellt wird.

Um Kosten für das Bereitstellen von Hardware und/oder Servern und Infrastruktur durch den Cloud-Anbieter zu sparen, können die ES-Applikationsinstanzen unterschiedlicher Kunden auf derselben Serverhardware und Laufzeitumgebung (insbesondere derselben virtuellen Maschine mit Linux OS oder derselben Plattform eines Platform-as-a-Service Cloud-Angebots) betrieben werden. Das Einrichten und Nutzen separater Cloud-Infrastruktur-Tenants wäre zwar bei nur wenigen Großkunden beherrschbar, aber insbesondere, wenn solche Lösungen für eine Vielzahl von Kunden wie z.B. Maschinenbauern angeboten werden sollen, würde ein solcher Ansatz nicht skalieren.

Ein Problem einer solchen Architektur, die die Nutzung einer Single-Tenancy Cloud-Infrastruktur für das Bereitstellen einer Engineering-Lösung für mehrere Tenants (Multi-Tenant auf Service/Applikations-Ebene) ist, dass die Projektierungssoftware und Projektierungsdaten der Kunden auf demselben System liegen bzw. ausgeführt werden und somit nur durch Betriebssystemmittel geschützt bzw. voneinander isoliert sind.

Ein Angreifer mit legitimem oder kompromittiertem Zugriff auf eine ES-Applikationsinstanz könnte durch das Ausnutzen einer oder mehrerer Schwachstellen im System, insbesondere einer Schwachstelle in einer Container Laufzeitumgebung, auf die ES-Applikationsinstanz und/oder Projektierungsdaten anderer Mandanten (Kunden) zugreifen. Dies kann zum Verlust von Know-How sowie zu einer Verletzung der Integrität von Projektierungsdaten führen.

Insbesondere die Verletzung der Integrität kann dazu führen, dass ein Automatisierungssystem nicht seine erwartete Funktion ausführt und im schlimmsten Fall erheblicher Schaden entsteht.

Ein bekannter Ansatz, um die Vertrauenswürdigkeit einer Cloud-basierten Projektierung zu erhöhen, ist das Bereitstellen von Mandanten-spezifischen Ausführungsinstanzen oder Mandanten-spezifischen Servern. Diese sind allerdings mit höheren Kosten für die Bereitstellung der Hardware und Infrastruktur durch den Cloud-Anbieter, sowie Betrieb der Instanzen, verbunden.

Es ist Measured Boot (oftmals auch "Trusted Boot") bekannt. Measured Boot findet typischerweise unter Verwendung eines Trusted Platform Modules (TPM) statt. Hierbei bildet, ausgehend von einer "root-of-trust", jede Boot-Komponente eine kryptographische Prüfsumme der nächsten Boot-Komponente. Die Prüfsummen werden anschließend in speziellen Registern, sog. Platform Configuration Registers (PCRs), des TPMs abgespeichert. Die PCRs enthalten somit Referenzen auf den Zustand jeder überprüften, geladenen Software-Komponente. Anschließend lässt sich somit nachverfolgen, ob und welche Komponente(n) (z.B. eine bestimmte Programmbinärdatei eines Engineering-Systems) beim Laden unverändert waren.

Im Zusammenhang mit Measured Boot ist das sog. "remote Attestation" bekannt, worin die Liste an PCR-Werten von einem im TPM gespeicherten und nicht extrahierbaren privaten Schlüssel signiert werden kann. Die Signatur und die Liste können anschließend an eine andere Instanz zur Überprüfung weitergegeben werden.

Bei Intel SGX handelt es sich um einen Satz von CPU-Anweisungen, mit denen Applikationen Enklaven erstellen können: geschützte Bereiche im Adressraum der Anwendung, die Vertraulichkeit und Integrität in Gegenwart eines privilegierten Angreifers gewährleisten sollen. Dabei wird der Code in der Enklave mithilfe spezieller Anweisungen aktiviert.

Die CPU verschlüsselt automatisch alle Daten in der Enklave, die den Prozessor verlassen (d. h. alles, was in den RAM-Speicher ausgelagert wird), und gewährleistet damit die Sicherheit der verwendeten Daten. Zudem hat nur die Enklave selbst Zugriff auf ihren Speicher, wodurch Manipulationen und das Auslesen durch privilegierte Angreifer verhindert werden können.

Bekannt ist grundsätzlich die Verschlüsselung des Hauptspeichers. Bekannte Speicherverschlüsselungstechnologien sind z.B. von AMD Secure Memory Encryption (SME), Transparent Secure Memory Encryption (TSME), Secure Encrypted Virtualization (SEV), Secure Encrypted Virtualization-Encrypted State (SEV-ES), Secure Encrypted Virtualization-Secure Nested paging. Von Intel sind hier analog die Intel Total Memory Encryption bzw. Multi-Key Total Memory Encryption, bekannt.

Insbesondere AMD SEV und Intel MKTME ermöglichen es, unterschiedlichen virtuellen Maschinen bzw. Containern zufällig gewählte, unterschiedliche Schlüssel zuzuordnen, die für eine Speicherverschlüsselung der Daten der virtuellen Maschinen verwendet werden. So lässt sich eine kryptographische Isolierung einer virtuellen Maschine gegenüber einem kompromittierten Host, sowie gegenüber anderen virtuellen Maschinen bzw. Containern realisieren. Sowohl Intel SGX als auch AMD SEV und Intel MKTME besitzen eine Attestierungsfunktionalität. Dabei stellt die CPU mit Hilfe eines geheimen Schlüssels eine signierte Information bzgl. der Speicherinhalte einer geladenen Software / Container / virtuellen Maschine aus. Diese kann durch einen Anwender geprüft werden, um zu verifizieren, dass die Software wie erwartet - und nicht manipuliert - durch die Laufzeitumgebung geladen wurde. Das Patent US 2018/373881 stellt ebenfalls relevanten Stand der Technik dar.

Die Aufgabe der Erfindung besteht darin, die Sicherheit von Cloud-Infrastrukturen für Projektierungssysteme zu erhöhen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft eine Attestierungskomponente, ausgebildet eine Cloud-basierte Ausführungsumgebung zu attestieren, wobei die Cloud-basierte Ausführungsumgebung mindestens eine Applikationsinstanz und eine Projektierung, die der mindestens einen Applikationsinstanz zugeordnet ist, aufweist,
die Attestierungskomponente aufweisend:
- Eine Ermittlungskomponente, ausgebildet mindestens eine Vertrauenswürdigkeitsinformation zu ermitteln, welche eine Vertrauenswürdigkeit der Cloud-basierten Ausführungsumgebung und der mindestens einen Applikationsinstanz angibt, und
- eine Verknüpfungskomponente, ausgebildet eine Verknüpfung der Vertrauenswürdigkeitsinformation und der Projektierung herzustellen.

Die Ermittlungskomponente ist somit als eine vertrauenswürdige Komponente zu verstehen. Die Ermittlungskomponente ermittelt die Vertrauenswürdigkeitsinformation, indem sie diese abruft oder erstellt.

Die Vertrauenswürdigkeitsinformation ist insbesondere als Integritätsinformation bezeichenbar. Die Vertrauenswürdigkeitsinformation bezieht sich dabei sowohl auf die Cloud-basierte Ausführungsumgebung, insbesondere ein Ausführungsumgebung einer Cloud-basierten Projektierungslösung (= Projektierungs-Tool, welches ein Erstellen einer Projektierung erlaubt), sowie auf die Applikationsinstanz(en) der Projektierungslösung selbst. Die Projektierung ist auch als Cloud-basierte Projektierung bezeichenbar.

Die Vertrauenswürdigkeitsinformation umfasst somit insbesondere eine Integritätsinformationen zu der Cloud-basierten Ausführungsumgebung und eine Integritätsinformationen zu der mindestens einen Applikationsinstanz.

Vertrauenswürdig bedeutet im Sinne der Erfindung, dass von einer Korrektheit von Daten der Cloud-basierten Ausführungsumgebung und der mindestens eine Applikationsinstanz sowie einer korrekten Funktionsweise der Cloud-basierten Ausführungsumgebung und der mindestens eine Applikationsinstanz ausgegangen wird. Dies bedeutet, dass nicht von einem stattgefundenen oder anstehenden Kompromittieren der Cloud-basierten Ausführungsumgebung und/oder der mindestens einen Applikationsinstanz ausgegangen wird. Vertrauenswürdig bedeutet außerdem, dass sich die Ausführungsumgebung, Applikationsinstanz(en) etc. in einem bekannten Zustand befinden und/oder in einem Zustand, der als nicht manipuliert angesehen wird, befinden.

Die Erfindung betrifft den Fall, dass ein Cloud-basiertes Projektierungs-Tool zum Erstellen der Projektierung verwendet wird.

Ein Aspekt der Erfindung besteht darin, eine Lösung bereitzustellen, mit der verlässlich sichergestellt werden kann, dass die in der Cloud-basierten Ausführungsumgebung mit mindestens einer Applikationsinstanz erstellte Projektierung vertrauenswürdig ist. Die Projektierung ist von einer oder mehrerer Automatisierungskomponenten verwendbar.

Die Grundidee der Erfindung besteht darin, eine Projektierung mit einer Vertrauenswürdigkeitsinformation im Rahmen des Projektierungsworkflows zu verknüpfen.

Die Vertrauenswürdigkeitsinformation hat den Vorteil, dass diese von dem Anwender geprüft werden kann, bevor die Projektierung auf einer Automatisierungskomponente zur Anwendung kommt.

Nachdem die Vertrauenswürdigkeitsinformation mittels der vertrauenswürdigen Komponente erstellt wurde, wird sie insbesondere über einen dedizierten, gesicherten Kanal zur Verfügung gestellt. Ein Empfangsknoten der Projektierung überprüft die Vertrauenswürdigkeitsinformation und verwendet bzw. aktiviert die Projektierung abhängig von einem Prüfergebnis.

Die Erfindung bietet insgesamt eine Möglichkeit, die Vertrauenswürdigkeit einer Cloud-basierten Projektierung zu erhöhen. So profitieren vor allem Kunden eines Multi-Mandanten Angebotes von einer erhöhten Sicherheit, als auch der Betreiber selbst durch das Einsparen von Hardware-, Infrastruktur- und Betriebskosten. Insgesamt wird auch die Vertrauenswürdigkeit einer Cloud-basierten Projektierung erhöht. Dies gilt auch für Single-Tenant Maschinen.

Grundsätzlich kann die Erfindung auch in Kombination mit Mandanten-spezifischen Ausführungsinstanzen oder Servern verwendet werden, um hier ebenfalls ein Angebot mit erhöhter Sicherheit zu bieten.

In einer Weiterbildung der Erfindung ist die Verknüpfung ausgebildet als:
- eine Referenz und/oder
- ein kryptographischer Hash-Wert und/oder
- ein Uniform Resource Identifier (URI)
auf die Projektierung.

Die Verknüpfungskomponente ist ausgebildet eine Verknüpfung, auch als Zuordnung bezeichenbar, der Vertrauenswürdigkeitsinformation und der Projektierung, welche in eine Automatisierungsanlage übertragbar ist, herzustellen. Dazu erfolgt die Zuordnung oder die Verknüpfung der Vertrauenswürdigkeitsinformation und der Projektierung, insbesondere indem die Vertrauenswürdigkeitsinformation eine Referenz, insbesondere einen kryptographischen Hash-Wert oder eine URI, auf die Projektierungsinformation umfasst. Die Referenz der Vertrauenswürdigkeitsinformation gibt somit die entsprechende Projektierung an, welche als vertrauenswürdig gilt. Dabei wird insbesondere die Vertrauenswürdigkeitsinformation, welche insbesondere selbst ein Hash-Wert von bestimmten Systemeigenschaften ist, mit einem Hash der Projektierungsdaten konkateniert und daraus ein gemeinsamer Hash-Wert gebildet werden. Dieser letzte, gemeinsame Hash-Wert bildet insbesondere die Verknüpfungskomponente.

In einer weiteren Weiterbildung der Erfindung setzt ein Ausführen der Projektierung ein Ergebnis eines Prüfens der mindestens einen Vertrauenswürdigkeitsinformation voraus. Nach dieser Ausführungsform überprüft ein Empfangsknoten der Projektierung insbesondere die Vertrauenswürdigkeitsinformation und verwendet bzw. aktiviert die Projektierung abhängig von einem Prüfergebnis. Die Projektierung kann so ausgebildet sein, dass dieses Prüfergebnis notwendig für die Verwendung der Projektierung ist.

Ein Empfänger einer Projektierung kann diese Information prüfen. Das Prüfen der Vertrauenswürdigkeitsinformation erfolgt insbesondere vor einer Anwendung der Projektierung, insbesondere einem Laden auf eine Automatisierungskomponente oder einer Aktivierung durch eine Automatisierungskomponente.

Insbesondere kann von einem Benutzer überprüft werden, dass die Projektierung tatsächlich auf einer vorgesehenen Applikationsinstanz erstellt wurde und dass dort eine zulässige Version des Projektierungs-Tool-Software ausgeführt wurde.

Die Prüfung der Vertrauenswürdigkeitsinformation kann in einer Variante automatisiert, z.B. durch den Programmieragenten (PA - Programming Agent) in einer Automatisierungsanlage, durchgeführt werden. Schlägt die Überprüfung fehl, wird die Verwendung der entsprechenden Projektierung abgelehnt. Es können zudem entsprechende Reaktionen, wie z.B. dem Erzeugen eines Log-Eintrags, Senden einer Mail an einen Admin oder Betreiber, Auslösen einer Systemwarnung, ausgeführt werden.

Ist die Prüfung erfolgreich, kann mit höherer Sicherheit angenommen werden, dass die Projektierung mit einer vertrauenswürdigen, Cloud-basierten Projektierungslösung erstellt wurde. Wenn eine Projektierung in einer anderen Cloud-Umgebung oder mit einer anderen Version erstellt wurde, kann dies somit erkannt werden.

In einer weiteren Weiterbildung der Erfindung weist die Attestierungskomponente außerdem auf:
- eine Prüfeinheit, ausgebildet ein Prüfen der mindestens einen Vertrauenswürdigkeitsinformation durchzuführen und ein Ergebnis des Prüfens zu erstellen.

In dieser Ausführungsform kann das Prüfen der Vertrauenswürdigkeitsinformation bereits von der Attestierungskomponente vorgenommen werden und das Prüfergebnis mit der Vertrauenswürdigkeitsinformation übermittelt werden. In einer dieser Varianten wird die Prüfung somit durch einen Cloud-basierten Monitoring-Server durchgeführt und nur das Ergebnis übertragen werden. So kann die Überprüfung einem Kunden direkt als Dienst angeboten werden.

In einer weiteren Weiterbildung der Erfindung weist die mindestens eine Vertrauenswürdigkeitsinformation:
- einen Hashwert eines Kernels und/oder
- einen Hashwert eines Binaries und/oder
- einen Hashwert einer Konfigurationsdatei eines Servers der Cloud-basierten Ausführungsumgebung und/oder der mindestens einen Applikationsinstanz auf. Dabei betrifft die Vertrauenswürdigkeitsinformation und deren Bestandteile jeweils jene Cloud-basierten Ausführungsumgebung und/oder der mindestens einen Applikationsinstanz, zu der die Vertrauenswürdigkeitsinformation ermittelt wurde.

Die Hashwerte, insbesondere Kryptographische Hashwerte, betreffen ausgewählte Teile der Cloud-basierten Ausführungsumgebung, wie insbesondere eines Bootloaders, Betriebssystemkernels, User-Space Programmbinärdateien, Container-Images, Konfigurationsdateien von Programmen.

Kryptographische Hashwerte der zu einer Applikationsinstanz gehörenden Dateien betreffen insbesondere Programmbinärdateien, wie Container Images, Konfigurationsdateien, Deployment-Informationen, wie Kubernetes PodSpec, Docker-Compose YAML.

Die Protokollierung der kryptographischen Hashwerte kann insbesondere unter Zuhilfenahme von Betriebssystem-Mechanismen, wie Linux IMA, als auch Hardware-Mechanismen, wie insbesondere AMD SEV Attestierung / Intel MKTME Attestierung, TPM-basierter Attestierung, SGX-Attestierung durchgeführt werden.

In einer weiteren Weiterbildung der Erfindung weist die mindestens eine Vertrauenswürdigkeitsinformation eine Information zu:
- einem Zustand der Cloud-basierten Ausführungsumgebung und/oder der mindestens eine Applikationsinstanz und/oder
- einer Umgebungsbedingung der Cloud-basierten Ausführungsumgebung und/oder der mindestens eine Applikationsinstanz und/oder
- einem Ereignis in Relation zu der Cloud-basierten Ausführungsumgebung und/oder der mindestens eine Applikationsinstanz
auf.

Darunter fallen insbesondere:
- Log-Einträge zu integritäts-relevanten Ereignissen, wie insbesondere fehlgeschlagene Host-Logins, Aufbau unerlaubter und/oder unerwarteter Verbindungen
- Information zur Konfiguration von Hardware und Software der Cloud-basierten Ausführungsumgebung, insbesondere ob bestimmte HW/SW-Sicherheitsfunktionen wie Intel CET, SELinux oder AppArmor, Secure-Boot aktiviert sind
- Ereignisse, die auf ein schadhaftes Verhalten der mindestens einen Applikationsinstanz hinweisen, insbesondere dem Ausführen nicht erlaubter Systemaufrufe oder unerwartete Abfolgen von Systemaufrufen.
- Es können Daten über die Projektierung selbst, wie insbesondere Audit-Log der mindestens einen Applikationsinstanz (ausgeführte Aktionen, Zeitpunkt, Nutzer), in die Project Trustworthiness Information (PTI) integriert werden. So kann die Vertrauenswürdigkeitsinformation auch zur verlässlichen Nachverfolgung von Änderungen im Falle eines kompromittierten Zugangs zu der mindestens einen Applikationsinstanz verwendet werden (insbesondere falls die Zugangsdaten für die mindestens eine Applikationsinstanz kompromittiert wurden).
- Versionsstände der auf der Cloud-basierten Ausführungsumgebung und/oder in der mindestens einen Applikationsinstanz verwendeten Softwarekomponenten. Diese können anschließend zum Abgleich mit Datenbanken, die Informationen zu bekannten Schwachstellen enthalten, verwendet werden. So kann insbesondere ermittelt werden, ob eine Projektierung zu einem Zeitpunkt erstellt wurde, zu dem sich Pakete mit bekannten Schwachstellen auf dem System befunden haben.
- Mandanten-Identifier derjenigen Nutzer, die die Projektierung erstellt bzw. modifiziert haben.

In einer weiteren Weiterbildung der Erfindung weist die mindestens eine Vertrauenswürdigkeitsinformation eine kryptographische Signatur auf.

Die Vertrauenswürdigkeitsinformation wird nach dieser Ausführungsform geschützt, insbesondere durch eine kryptographische Signatur. Der zum Erzeugen der Signatur verwendete Schlüssel sollte dabei ebenfalls nur durch die zugehörige Attestierungskomponente zugreifbar sein und kann gesondert geschützt werden, insbesondere mittels Hardware-Mechanismen wie Intel SGX, ARM TrustZone, oder über eine Software-basierte Isolation, wie insbesondere SELinux oder AppArmor.

Die Vertrauenswürdigkeitsinformation kann auch als Attestation, als Verifiable Credential oder Verifiable Presentation bereitgestellt werden.

In einer Variante kann die Attestierungskomponente auch so implementiert werden, dass das System, welches die Vertrauenswürdigkeitsinformation erhält, verifizieren kann, dass diese auf korrekte Art und Weise (Durchführung der erwarteten Schritte) ermittelt wurde, wie unter "Verifiable Computing" bekannt.

In einer weiteren Weiterbildung der Erfindung weist die mindestens eine Vertrauenswürdigkeitsinformation eine Mandanteninformation auf, wobei die Mandanteninformation einen Ersteller der Projektierung betrifft. Es wird somit vorgeschlagen, dass die Vertrauenswürdigkeitsinformation eine Information zu einem Mandanten, insbesondere Tenant, bzw. einzelnen, unterschiedlichen Nutzern dieser Tenants, insbesondere in Form einer ID oder eines Zertifikats, umfasst, dem die auf die Cloud-basierte Projektierungslösung zugreifenden Nutzer zugeordnet sind. Dabei kann ein einzelner Mandant vorliegen, es können allgemein jedoch auch mehrere Mandanten vorliegen.

Dadurch kann erkannt werden, wenn unzulässigerweise eine Projektierung geladen wird, die von einem anderen Mandanten als erwartet erstellt wurde. Dies kann selbst dann unterschieden werden, wenn unterschiedliche Mandanten die gleiche Cloud-basierte Projektierungslösung zum Erstellen von Projektierungen verwenden.

In einer weiteren Weiterbildung der Erfindung weist die Attestierungskomponente außerdem auf:
- Eine Bereitstellungskomponente, ausgebildet die Vertrauenswürdigkeitsinformation zu der Projektierung bereitzustellen.

Die Vertrauenswürdigkeitsinformation wird dabei insbesondere über einen dedizierten, gesicherten Kanal zur Verfügung gestellt. Das Bereitstellen der Vertrauenswürdigkeitsinformation erfolgt insbesondere an einen interaktiven Nutzer einer Applikationsinstanz, oder an ein System oder eine Automatisierungskomponente innerhalb der Automatisierungsanlage (vorzugsweise in kryptographisch geschützter Form, insbesondere einer Attestation oder einem Verifiable Credential oder Verifiable Presentation, wie zuvor beschrieben).

Da eine Übertragung einer möglicherweise manipulierten Projektierung an einen Projektierungsserver in der Automatisierungsanlage durch eine möglicherweise kompromittierten Applikationsinstanz selbst erfolgt, wird somit vorgeschlagen, die Vertrauenswürdigkeitsinformation über einen zweiten Kanal an den Projektierungsserver in der Automatisierungsanlage zu übertragen. Die Vertrauenswürdigkeitsinformationen werden durch die Attestierungskomponente in ihrer geschützten Ausführungsumgebung verwaltet und können entweder direkt an den Projektierungs-Server des Kunden oder Mandanten oder über die Cloud-basierte Ausführungsumgebung, insbesondere einen Cloud-basierten Monitoring Server, übertragen werden.

Der Cloud-basierte Monitoring-Server ist optional, bietet aber mehrere Vorteile: Zum einen ist dieser nicht direkt durch eine kompromittierte Attestierungskomponente oder Cloud-basierte Ausführungsumgebung zugreifbar. Weiterhin kann das Ergebnis einer Überprüfung der Vertrauenswürdigkeitsinformation einem Anwender direkt zur Verfügung gestellt werden, insbesondere über eine webbasierte Oberfläche, die über den Cloud-basierten Monitoring-Server bereitgestellt wird. Nachteilhaft sind die etwas höheren Kosten für den Betreiber der Cloud-basierten Projektierungslösung, da ein zusätzlicher Server gemietet und betrieben werden muss. Grundsätzlich könnte dies aber auch als zusätzlicher Dienst für einen Kunden, der eine verbesserte Zusicherung der Vertrauenswürdigkeit der Projektierungsumgebung haben möchte, verrechnet werden.

In einer weiteren Weiterbildung der Erfindung ist die Projektierung ausgebildet als:
- ein Programm für eine speicherprogrammierbare Steuerung (PLC), auch als Programmable Logic Controller bezeichenbar, und/oder
- ein Programm für ein Human Machine Interface (HMI) Gerät und/oder
- ein Programm für eine Ein-/Ausgabe- (IO-) Baugruppe.

In einer weiteren Weiterbildung der Erfindung ist die Projektierung ausgebildet von:
- einer Automatisierungskomponente und/oder
- einer Fertigungsanlage und/oder
- einem Produktionssystem und/oder
- einer Automatisierungsanlage
herangezogen zu werden.

In einer weiteren Weiterbildung der Erfindung ist die Attestierungskomponente innerhalb der Cloud-basierten Ausführungsumgebung und/oder isoliert von der mindestens einen Applikationsinstanz ausgebildet.

Vorzugsweise ist die Attestierungskomponente gegenüber den Applikationsinstanzen gesondert isoliert. Diese können insbesondere als dedizierte Prozesse in der Cloud-basierte Ausführungsumgebung realisiert werden, die über Betriebssystemmittel wie SELinux, AppArmor, Smack, durch Integration in das Betriebssystem oder einen Hypervisor, Ausführung in einer Trusted Execution Environment (SGX Enklave, ARM TrustZone Secure World, etc.) realisiert und so gegenüber einer kompromittierten Applikationsinstanz geschützt sind.

Prinzipiell ist die Attestierungskomponente auch auf zusätzlichen Hardwaremodulen oder Komponenten realisierbar, die Zugriff auf die Cloud-basierte Ausführungsumgebung, insbesondere in Form von DMA-Zugriffen auf den Hauptspeicher, haben. Beispiele sind die Realisierung als PCIe-Einsteckkarte, oder über spezielle Servermanagement-Funktionen (z.B. Redfish). Die Konfiguration erfolgt über eine Monitoring Policy (MP), in der definiert wird, welche Teile der Cloud-basierten Ausführungsumgebung und der Applikationsinstanz durch die Attestierungskomponente bei der Berechnung der Vertrauenswürdigkeitsinformation berücksichtigt werden sollen. Denkbar ist auch die Konfiguration des Zeitpunkts der Berechnung, insbesondere bei jedem Projekt-Download, beim Starten der Cloud-basierten Ausführungsumgebung und/oder einer Applikationsinstanz, zyklisch in regelmäßigen Abständen, insbesondere alle 10 Minuten, bei jedem Schreibvorgang auf eine Projektierungsdatei, etc.

Die Erfindung umfasst außerdem ein Verfahren zum Attestieren einer Cloud-basierten Ausführungsumgebung, wobei die Cloud-basierte Ausführungsumgebung mindestens eine Applikationsinstanz und eine Projektierung, die der mindestens einen Applikationsinstanz zugeordnet ist, aufweist,
mit den Schritten:
- Ein Ermitteln mindestens einer Vertrauenswürdigkeitsinformation, welche eine Vertrauenswürdigkeit der Cloud-basierten Ausführungsumgebung und der mindestens eine Applikationsinstanz angibt,
- ein Verknüpfen der Vertrauenswürdigkeitsinformation und der Projektierung herzustellen und
- ein Ausgeben der Vertrauenswürdigkeitsinformation, wodurch ein Attestieren der Cloud-basierte Ausführungsumgebung erfolgt.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: eine schematische Darstellung der erfindungsgemäßen Vorrichtung mit interagierenden Komponenten und
- Fig. 2: ein Ablaufdiagramm des erfindungsgemäßen Verfahrens.

### DETAILLIERTE BESCHREIBUNG DER ERFINDUNG

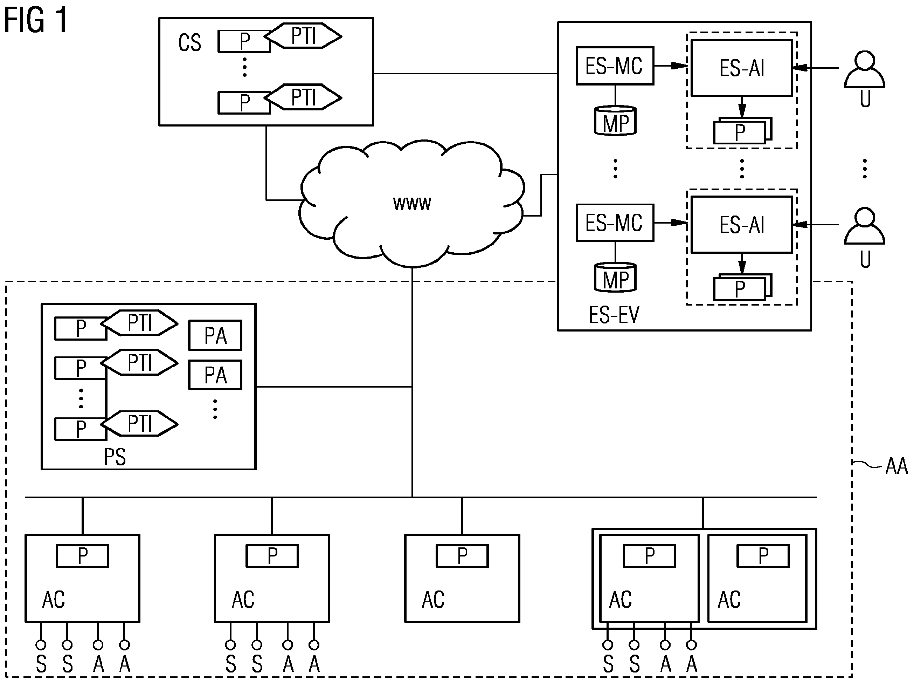

Fig. 1 zeigt eine Ausführungsform einer erfindungsgemäßen Cloud-basierte Ausführungsumgebung ES-EV, auch als Engineering System Execution Environment ES-EV bezeichenbar, eines Cloud-basierten Projektierungssystems. In der Cloud-basierten Ausführungsumgebung ES-EV läuft pro Nutzer U oder Mandant U oder Kunde U der Projektierungslösung eine Applikationsinstanz ES-AI, auch als Engineering System Application Instance ES-AI bezeichenbar, z.B. TIA Portal Instanz, die durch den Nutzer U oder Mandanten U verwendet wird, um eine oder mehrere Projektierungen P, z.B. ein Programm für eine PLC, ein HMI Device, eine IO Baugruppe, zu erstellen.

Diese Projektierungen P werden durch den Anwender U von dem Clous-Server CS über eine Internetverbindung www auf einen Projektierungsserver PS in der Automatisierungsanlage AA geladen. Von dort können diese auf die jeweiligen Automatisierungskomponenten AC, insbesondere ausgebildet als PLC, HMI oder vPLC, in der Automatisierungsanlage AA geladen werden. Die Automatisierungskomponenten AC weisen Sensoren S und Aktoren A auf. Empfang und weitere Übertragung können dabei mittels eines Programmieragenten PA, auch als Programming Agent bezeichenbar, durchgeführt werden, der auf dem Projektierungs-Server PS läuft.

Erfindungsgemäß sind nun folgende, zusätzliche Komponenten vorgesehen:
- Die vertrauenswürdigen Attestierungskomponenten ES-MCs, auch als Engineering System Monitoring Component ES-MCs bezeichenbar, werden durch den Anbieter der Cloud-basierten Projektierungslösung bereitgestellt und konfiguriert. Diese besitzen Zugriff auf die Cloud-basierte Ausführungsumgebung ES-EV und die Attestierungskomponenten ES-AIs um entsprechende Vertrauenswürdigkeitsinformation PTI, auch als Integritätsinformationen PTI oder Project Trustworthiness Information PTI bezeichenbar, zu berechnen. Die Integritätsinformationen PTI umfasst zudem eine Verknüpfung mit einer Projektierung.

Die Konfiguration der vertrauenswürdigen Engineering System Monitoring Components ES-MCs erfolgt über eine Monitoring Policy MP, in der definiert wird, welche Teile der Cloud-basierten Ausführungsumgebung ES-EV und der Applikationsinstanz ES-AIs durch die Attestierungskomponenten ES-MCs bei der Berechnung der Vertrauenswürdigkeitsinformation PTI berücksichtigt werden sollen.

Vorzugsweise sind die Attestierungskomponenten ES-MCs gegenüber den Applikationsinstanzen ES-AIs gesondert isoliert. Diese können beispielsweise als dedizierte Prozesse auf dem ES-EV realisiert werden, die über Betriebssystemmittel wie SELinux, AppArmor, Smack, durch Integration in das Betriebssystem oder einen Hypervisor, Ausführung in einer Trusted Execution Environment (SGX Enklave, ARM TrustZone Secure World, etc.) realisiert und so gegenüber einer kompromittierten Applikationsinstanz ES-AI geschützt sind.

Prinzipiell können die ES-MCs auch auf zusätzlichen Hardwaremodulen / Komponenten realisiert werden, die Zugriff auf die Cloud-basierte Ausführungsumgebung ES-EV, insbesondere in Form von DMA-Zugriffen auf den Hauptspeicher) haben. Ausführungsformen sind die Realisierung als PCIe-Einsteckkarte, oder insbesondere über spezielle Servermanagement-Funktionen (z.B. Redfish). Die Konfiguration erfolgt über eine Monitoring Policy MP, in der definiert wird, welche Teile der Cloud-basierten Ausführungsumgebung ES-EV und der Applikationsinstanz ES-AIs durch die Attestierungskomponenten ES-MCs bei der Berechnung der Vertrauenswürdigkeitsinformation PTI berücksichtigt werden sollen. Denkbar ist auch die Konfiguration des Zeitpunkts der Berechnung, z.B. bei jedem Projekt-Download, beim Starten der Cloud-basierten Ausführungsumgebung ES-EV und / oder einer Applikationsinstanz ES-AI, zyklisch in regelmäßigen Abständen (z.B. alle 10 Minuten), bei jedem Schreibvorgang auf eine Projektierungsdatei P, etc.

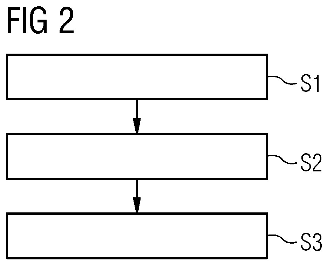

Fig. 2 zeigt ein Ablaufdiagramm eines erfindungsgemäßen Verfahrens zum Attestieren einer Cloud-basierten Ausführungsumgebung, wobei die Cloud-basierte Ausführungsumgebung mindestens eine Applikationsinstanz und eine Projektierung, die der mindestens einen Applikationsinstanz zugeordnet ist, aufweist,
mit den Schritten:
- Schritt S1: Ein Ermitteln mindestens einer Vertrauenswürdigkeitsinformation, welche eine Vertrauenswürdigkeit der Cloud-basierten Ausführungsumgebung und der mindestens eine Applikationsinstanz angibt,
- Schritt S2: Ein Verknüpfen der Vertrauenswürdigkeitsinformation und der Projektierung herzustellen und
- Schritt S3: Ein Ausgeben der Vertrauenswürdigkeitsinformation, wodurch ein Attestieren der Cloud-basierte Ausführungsumgebung erfolgt.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Attestierungskomponente (ES-MC), ausgebildet eine Cloud-basierte Ausführungsumgebung (ES-EV) zu attestieren, wobei die Cloud-basierte Ausführungsumgebung (ES-EV) mindestens eine Applikationsinstanz (ES-AI) und eine Projektierung (P), die der mindestens einen Applikationsinstanz (ES-AI) zugeordnet ist, aufweist,
die Attestierungskomponente (ES-MC) aufweisend:
- Eine Ermittlungskomponente, ausgebildet mindestens eine Vertrauenswürdigkeitsinformation (PTI) zu ermitteln, welche eine Vertrauenswürdigkeit der Cloud-basierten Ausführungsumgebung (ES-EV) und der mindestens einen Applikationsinstanz (ES-AI) angibt,
wobei die mindestens eine Vertrauenswürdigkeitsinformation (PTI) eine kryptographische Signatur aufweist,
- eine Verknüpfungskomponente, ausgebildet eine Verknüpfung der Vertrauenswürdigkeitsinformation (PTI) und der Projektierung (P) herzustellen,
wobei die Verknüpfung ausgebildet ist als:
- eine Referenz und/oder
- ein kryptographischer Hash-Wert und/oder
- ein Uniform Resource Identifier auf die Projektierung (P).

2. Attestierungskomponente (ES-MC) nach Anspruch 1,
wobei ein Ausführen der Projektierung (P) ein Ergebnis eines Prüfens der mindestens einen Vertrauenswürdigkeitsinformation (PTI) voraussetzt.

3. Attestierungskomponente (ES-MC) nach einem der vorhergehenden Ansprüche,
außerdem aufweisend:
- eine Prüfeinheit, ausgebildet ein Prüfen der mindestens einen Vertrauenswürdigkeitsinformation (PTI) durchzuführen und ein Ergebnis des Prüfens zu erstellen.

4. Attestierungskomponente (ES-MC) nach einem der vorhergehenden Ansprüche,
wobei die mindestens eine Vertrauenswürdigkeitsinformation (PTI):
- einen Hashwert eines Kernels und/oder
- einen Hashwert eines Binaries und/oder
- einen Hashwert einer Konfigurationsdatei eines Servers der Cloud-basierten Ausführungsumgebung (ES-EV) und/oder der mindestens einen Applikationsinstanz (ES-AI) aufweist.

5. Attestierungskomponente (ES-MC) nach einem der vorhergehenden Ansprüche,
wobei die mindestens eine Vertrauenswürdigkeitsinformation (PTI) eine Information zu:
- einem Zustand der Cloud-basierten Ausführungsumgebung (ES-EV) und/oder der mindestens eine Applikationsinstanz (ES-AI) und/oder
- einer Umgebungsbedingung der Cloud-basierten Ausführungsumgebung (ES-EV) und/oder der mindestens eine Applikationsinstanz (ES-AI) und/oder
- einem Ereignis in Relation zu der Cloud-basierten Ausführungsumgebung (ES-EV) und/oder der mindestens eine Applikationsinstanz (ES-AI)
aufweist.

6. Attestierungskomponente (ES-MC) nach einem der vorhergehenden Ansprüche,
wobei die mindestens eine Vertrauenswürdigkeitsinformation (PTI) eine Mandanteninformation aufweist, wobei die Mandanteninformation einen Ersteller der Projektierung (P) betrifft.

7. Attestierungskomponente (ES-MC) nach einem der vorhergehenden Ansprüche,
außerdem aufweisend:
- Eine Bereitstellungskomponente, ausgebildet die Vertrauenswürdigkeitsinformation (PTI) zu der Projektierung (P) bereitzustellen.

8. Attestierungskomponente (ES-MC) nach einem der vorhergehenden Ansprüche,
wobei die Projektierung (P) ausgebildet ist als:
- ein Programm für eine speicherprogrammierbare Steuerung und/oder
- ein Programm für ein Human-Machine-Interface-Gerät und/oder
- ein Programm für eine Ein-/Ausgabe-Baugruppe.

9. Attestierungskomponente (ES-MC) nach einem der vorhergehenden Ansprüche,
wobei die Projektierung (P) ausgebildet ist von:
- einer Automatisierungskomponente (AC) und/oder
- einer Fertigungsanlage und/oder
- einem Produktionssystem und/oder
- einer Automatisierungsanlage (AA)
herangezogen zu werden.

10. Attestierungskomponente (ES-MC) nach einem der vorhergehenden Ansprüche,
ausgebildet innerhalb der Cloud-basierten Ausführungsumgebung (ES-EV) und/oder
ausgebildet isoliert von der mindestens einen Applikationsinstanz (ES-AI).

11. Verfahren zum Attestieren einer Cloud-basierten Ausführungsumgebung (ES-EV), wobei die Cloud-basierte Ausführungsumgebung (ES-EV) mindestens eine Applikationsinstanz (ES-AI) und eine Projektierung (P), die der mindestens einen Applikationsinstanz (ES-AI) zugeordnet ist, aufweist,
mit den Schritten:
- Ein Ermitteln (S1) mindestens einer Vertrauenswürdigkeitsinformation (PTI), welche eine Vertrauenswürdigkeit der Cloud-basierten Ausführungsumgebung (ES-EV) und der mindestens eine Applikationsinstanz (ES-AI) angibt,
- ein Verknüpfen (S2) der Vertrauenswürdigkeitsinformation (PTI) und der Projektierung (P) herzustellen wobei
die Verknüpfung ausgebildet ist als:
- eine Referenz und/oder
- ein kryptographischer Hash-Wert und/oder
- ein Uniform Resource Identifier
auf die Projektierung (P)und
- ein Ausgeben (S3) der Vertrauenswürdigkeitsinformation (PTI), wodurch ein Attestieren der Cloud-basierte Ausführungsumgebung (ES-EV) erfolgt.

## Claims

1. Attestation component (ES-MC) configured to attest a cloud-based execution environment (ES-EV), wherein the cloud-based execution environment (ES-EV) comprises at least one application instance (ES-AI) and a project plan (P) assigned to the at least one application instance (ES-AI),
the attestation component (ES-MC) having:
- a determination component configured to determine at least one piece of trustworthiness information (PTI) indicating a trustworthiness of the cloud-based execution environment (ES-EV) and of the at least one application instance (ES-AI),
wherein the at least one piece of trustworthiness information (PTI) has a cryptographic signature,
- a linking component configured to establish a link between the trustworthiness information (PTI) and the project plan (P),
wherein the link is configured as:
- a reference and/or
- a cryptographic hash value and/or
- a Uniform Resource Identifier
for the project plan (P).

2. Attestation component (ES-MC) according to Claim 1,
wherein an execution of the project plan (P) requires a result of a check of the at least one piece of trustworthiness information (PTI).

3. Attestation component (ES-MC) according to one of the preceding claims,
additionally having:
- a checking unit configured to perform a check of the at least one piece of trustworthiness information (PTI) and to produce a result of the check.

4. Attestation component (ES-MC) according to one of the preceding claims,
wherein the at least one piece of trustworthiness information (PTI) comprises:
- a hash value of a kernel and/or
- a hash value of a binary and/or
- a hash value of a configuration file of a server of the cloud-based execution environment (ES-EV) and/or of the at least one application instance (ES-AI).

5. Attestation component (ES-MC) according to one of the preceding claims,
wherein the at least one piece of trustworthiness information (PTI) comprises information relating to:
- a state of the cloud-based execution environment (ES-EV) and/or of the at least one application instance (ES-AI) and/or
- an environmental condition of the cloud-based execution environment (ES-EV) and/or of the at least one application instance (ES-AI) and/or
- an event in relation to the cloud-based execution environment (ES-EV) and/or the at least one application instance (ES-AI).

6. Attestation component (ES-MC) according to one of the preceding claims,
wherein the at least one piece of trustworthiness information (PTI) comprises client information, wherein the client information relates to a creator of the project plan (P).

7. Attestation component (ES-MC) according to one of the preceding claims,
additionally having:
- a provisioning component configured to provide the trustworthiness information (PTI) for the project plan (P).

8. Attestation component (ES-MC) according to one of the preceding claims,
wherein the project plan (P) is configured as:
- a program for a programmable logic controller and/or
- a program for a human-machine interface device and/or
- a program for an input/output module.

9. Attestation component (ES-MC) according to one of the preceding claims,
wherein the project plan (P) is configured to be used by:
- an automation component (AC) and/or
- a manufacturing facility and/or
- a production system and/or
- an automation system (AA).

10. Attestation component (ES-MC) according to one of the preceding claims,
formed within the cloud-based execution environment (ES-EV) and/or
formed in isolation from the at least one application instance (ES-AI).

11. Method for attesting a cloud-based execution environment (ES-EV), wherein the cloud-based execution environment (ES-EV) comprises at least one application instance (ES-AI) and a project plan (P) assigned to the at least one application instance (ES-AI),
the method having the steps of:
- determining (S1) at least one piece of trustworthiness information (PTI) indicating a trustworthiness of the cloud-based execution environment (ES-EV) and of the at least one application instance (ES-AI),
- establishing a link (S2) between the trustworthiness information (PTI) and the project plan (P), wherein the link is configured as:
- a reference and/or
- a cryptographic hash value and/or
- a Uniform Resource Identifier
for the project plan (P), and
- outputting (S3) the trustworthiness information (PTI), which results in attestation of the cloud-based execution environment (ES-EV).

## Revendications

1. Composant d'attestation (ES-MC), conçu pour attester un environnement d'exécution en nuage (ES-EV), dans lequel l'environnement d'exécution en nuage (ES-EV) comprend au moins une instance d'application (ES-AI) et une configuration de projet (P) associée à la au moins une instance d'application (ES-AI),
le composant d'attestation (ES-MC) comprenant :
- un composant de détermination, conçu pour déterminer au moins une information de fiabilité (PTI) indiquant une fiabilité de l'environnement d'exécution en nuage (ES-EV) et de la au moins une instance d'application (ES-AI),
dans lequel la au moins une information de fiabilité (PTI) comprend une signature cryptographique,
- un composant de création de relation conçu pour créer une relation entre l'information de fiabilité (PTI) et la configuration de projet (P),
dans lequel la relation est conçue pour être :
- une référence et/ou
- une valeur de hachage cryptographique et/ou
- un identifiant de ressource uniforme
sur la configuration de projet (P).

2. Composant d'attestation (ES-MC) selon la revendication 1, dans lequel une exécution de la configuration de projet (P) nécessite un résultat d'une vérification de la au moins une information de fiabilité (PTI).

3. Composant d'attestation (ES-MC) selon l'une quelconque des revendications précédentes,
comprenant en outre :
- une unité de vérification configurée pour mettre en œuvre une vérification de la au moins une information de fiabilité (PTI) et pour générer un résultat de la vérification.

4. Composant d'attestation (ES-MC) selon l'une quelconque des revendications précédentes,
dans lequel la au moins une information de fiabilité (PTI) comprend :
- une valeur de hachage d'un noyau et/ou
- une valeur de hachage d'un fichier binaire et/ou
- une valeur de hachage d'un fichier de configuration d'un serveur de l'environnement d'exécution en nuage (ES-EV) et/ou de la au moins une instance d'application (ES-AI).

5. Composant d'attestation (ES-MC) selon l'une quelconque des revendications précédentes,
dans lequel la au moins une information de fiabilité (PTI) comprend une information sur :
- un état de l'environnement d'exécution en nuage (ES-EV) et/ou de la au moins une instance d'application (ES-AI) et/ou
- un état d'environnement de l'environnement d'exécution en nuage (ES-EV) et/ou de la au moins une instance d'application (ES-AI) et/ou
- un événement associé à l'environnement d'exécution en nuage (ES-EV) et/ou à la au moins une instance d'application (ES-AI).

6. Composant d'attestation (ES-MC) selon l'une quelconque des revendications précédentes,
dans lequel la au moins une information de fiabilité (PTI) comprend une information de client, dans lequel l'information de client concerne un créateur de la configuration de projet (P).

7. Composant d'attestation (ES-MC) selon l'une quelconque des revendications précédentes,
comprenant en outre :
- un composant de fourniture conçu pour fournir l'information de fiabilité (PTI) à la configuration de projet (P).

8. Composant d'attestation (ES-MC) selon l'une quelconque des revendications précédentes,
dans lequel la configuration de projet (P) est conçue pour être :
- un programme destiné à un automate programmable industriel et/ou
- un programme destiné à un appareil d'interaction homme-machine et/ou
- un programme destiné à un module d'entrée/sortie.

9. Composant d'attestation (ES-MC) selon l'une quelconque des revendications précédentes,
dans lequel la configuration de projet (P) est conçue pour être utilisée par :
- un composant d'automatisation (AC) et/ou
- une installation de fabrication et/ou
- un système de production et/ou
- un système d'automatisation (AA).

10. Composant d'attestation (ES-MC) selon l'une quelconque des revendications précédentes,
conçu pour se trouver au sein de l'environnement d'exécution en nuage (ES-EV) et/ou
conçu pour être indépendant de la au moins une instance d'application (ES-AI).

11. Procédé permettant d'attester un environnement d'exécution en nuage (ES-EV), dans lequel l'environnement d'exécution en nuage (ES-EV) comprend au moins une instance d'application (ES-AI) et une configuration de projet (P) associée à la au moins une instance d'application (ES-AI),
comprenant les étapes consistant à :
- déterminer (S1) au moins une information de fiabilité (PTI) indiquant une fiabilité de l'environnement d'exécution en nuage (ES-EV) et de la au moins une instance d'application (ES-AI),
- créer une relation (S2) entre l'information de fiabilité (PTI) et la configuration de projet (P), dans lequel la relation est conçue pour être :
- une référence et/ou
- une valeur de hachage cryptographique et/ou
- un identifiant de ressource uniforme
sur la configuration de projet (P) et
- sortir (S3) l'information de fiabilité (PTI), ce qui entraine une attestation de l'environnement d'exécution en nuage (ES-EV).
